# EUROPÄISCHE PATENTSCHRIFT

(11) **EP 2 229 088 B1**
(45) Veröffentlichungstag und Bekanntmachung des Hinweises auf die Patenterteilung: **26.10.2011**
(21) Anmeldenummer: 08861786.5
(22) Anmeldetag: 11.12.2008
(51) Int. Cl.: A47L 9/02, A47L 9/28

(54) **VERFAHREN ZUR AUSWERTUNG EINES PARTIKELSIGNALS UND SAUGDÜSE FÜR EINEN STAUBSAUGER**
METHOD FOR EVALUATING A PARTICLE SIGNAL AND SUCTION NOZZLE FOR A VACUUM CLEANER
PROCÉDÉ POUR INTERPRÉTER UN SIGNAL DE PARTICULES, ET BUSE ASPIRANTE POUR UN ASPIRATEUR

(30) Priorität: 17.12.2007 DE 102007061146
(43) Veröffentlichungstag der Anmeldung: 22.09.2010
(73) Patentinhaber: Miele & Cie. KG, 33332 Gütersloh (DE)
(72) Erfinder: TIEKÖTTER, Stefan, 33699 Bielefeld (DE); WOLF, Cornelius, 33739 Bielefeld (DE)
(86) Internationale Anmeldenummer: PCT/EP2008/010515
(87) Internationale Veröffentlichungsnummer: WO 2009/077117

(56) Entgegenhaltungen:
- WO-A-2005/077243
- DE-A1- 19 855 101
- JP-A- 4 193 244
- JP-A- 4 279 129
- US-A1- 2005 065 662
- US-A1- 2007 214 596

## Beschreibung

Die Erfindung betrifft ein Verfahren zur Auswertung eines Partikelsignals mittels einer Steuereinrichtung zugeordneten Auswerteeinheit, bei dem das Partikelsignal mittels eines Sensors innerhalb eines Strömungselements erzeugt wird und wenigstens abhängig ist von der Anzahl von Partikeln in einer Zweiphasen-Strömung, welche bei der Reinigung einer Fläche mittels einer mit dem Strömungselement verbundenen Saugeinrichtung erzeugt wird, und bei dem die Auswerteeinheit aus dem Partikelsignal zur weiteren Steuerung eines von der Steuereinrichtung beeinflussten Aktors ein Steuersignal ermittelt. Die Erfindung betrifft außerdem eine Saugdüse für einen Staubsauger zur Durchführung eines solchen Verfahrens.

Ein Verfahren bzw. ein Saugvorsatz dieser Art ist aus der EP 0 759157 B1 bekannt. Dort wird als Sensor ein piezoelektrischer Sensor verwendet, dessen Partikelsignale zunächst aufbereitet und anschließend zur Ansteuerung einer LED-Anzeige und zur Steuerung der Saugleistung des Staubsaugers verwendet werden. Die aufgenommene Staubmenge und damit das Partikelsignal hängt aber nicht nur von der eingestellten Saugleistung ab, sondern auch von anderen Faktoren.

Aus der DE 691 08 082 T2 ist es bekannt, neben der Staubmenge selbst deren Änderungsrate bei der Steuerung der Drehzahl eines Sauggebläses und eines Bürstenmotors zu berücksichtigen. Eine parallel geschaltete Anzeige berücksichtigt nur die Staubmenge selbst. Theoretische Grundlage für den beschriebenen Auswertealgorithmus ist die Erfassung der Staubmengen-Änderungsrate auf verschiedenen Bodenbelägen während ununterbrochenen Reinigens an der gleichen Stelle. Dabei wird außer Acht gelassen, dass dies nicht den Gewohnheiten beim Staubsaugen entspricht. Üblicherweise wird vielmehr die zur Reinigung verwendete Saugdüse hin und her geschoben, so dass aufgrund des schnellen Ortswechsels die Änderungsrate der Staubmenge nichts über das Abnehmen der Verschmutzung an einer konkreten Stelle und damit über den Bodenbelag aussagt, sondern eher über graduelle Unterschiede in der Verschmutzung der insgesamt überfahrenen Fläche.

Aus der DE 10 2006 001 337 B3 ist es bekannt, mittels einer Kombination eines piezoelektrischen und eines optischen Partikelsensors die Art der zu reinigenden Fläche zu ermitteln.

Die US 2007//0214596 A1 zeigt einen Staubsauger, bei welchem ein Partikelsignal ermittelt und zur Anzeige gebracht wird. Darüber hinaus besitzt die Bodendüse des Staubsaugers einen Geschwindigkeitssensor. Auch die Geschwindigkeit, mit der die Bodendüse bewegt wird, wird angezeigt. Es erfolgt aber keine Verknüpfung zwischen dem Partikelsignal und der gemessenen Geschwindigkeit.

Die JP 04 193244 A und die JP 04 279129 A offenbaren Staubsauger, bei denen ebenfalls die Vorschubgeschwindigkeit der Bodendüse gemessen wird. Das dadurch gewonnene Signal wird zur Steurung der Gebläseleistung verwendet.

Der Erfindung stellt sich somit das Problem, ein Verfahren zur Auswertung eines Partikelsignals der eingangs genannten Art zu offenbaren, bei dem neben der Staubmenge weitere Einflussfaktoren für das Staubvorkommen sicher berücksichtigt werden.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden abhängigen Verfahrensansprüchen.

Der Erfindung stellt sich auch das Problem, eine Saugdüse für einen Staubsauger zu offenbaren, die zur Durchführung des vorgenannten Verfahrens geeignet ist. Dieses Problem wird durch eine Saugdüse mit den Merkmalen des Patentanspruchs 11 gelöst.

Die Vorteile aus dem erfindungsgemäßen Verfahren werden dadurch erreicht, dass die Auswerteeinheit bei der Ermittlung des Steuersignals neben dem Partikelsignal die Geschwindigkeit, mit der das Strömungselement über die Fläche bewegt wird, berücksichtigt. Durch diesen zusätzlichen Parameter wird eine zuverlässige Information über die Aufnahmewahrscheinlichkeit von Staub gewonnen, ohne dass das Partikelsignal selbst weiter ausgewertet werden muss. Auf diese Weise wird dem Umstand Rechnung getragen, dass sich bei einem schnelleren Vorschub des Strömungselements die Staubaufnahme mit großer Wahrscheinlichkeit erhöht. Dabei kann die Geschwindigkeit an einem Saugmundstück gemessen werden, das dem Strömungselement vorangestellt ist. Es ist beispielsweise möglich, die Geschwindigkeit aus den Umdrehungen mindestens eines an dem Saugmundstück angeordneten Rads zu ermitteln.

Es ist vorteilhaft, wenn als Sensor ein piezoelektrischer Sensor verwendet wird, welcher von der Bewegungsenergie der Partikel abhängige Signalimpulse erzeugt. Hierdurch ist eine sehr genaue Erfassung des Staubaufkommens möglich, wie sie beispielsweise mit optischen Sensoren nicht erreicht werden kann.

Es ist auch vorteilhaft, wenn die Auswerteeinheit bei der Ermittlung des Steuersignals die Art der zu reinigenden Fläche berücksichtigt. Wie schon aus der DE 691 08 082 T2 bekannt, ist das Staubaufkommen auch vom bearbeiteten Bodenbelag abhängig. Es ist aber besser, den einflussgebenden Faktor selbst zu bestimmen und zu berücksichtigen, als diesen aus dem Signal, welches beeinflusst werden soll, herauszufiltern. Die Art der zu reinigenden Fläche kann einfach und sicher mittels eines Ultraschallwandlers ermittelt werden.

Um dem Benutzer einen Hinweis auf den Fortschritt beim Reinigen einer Bodenfläche zu geben, ist es zweckmäßig, wenn die Steuereinrichtung eine Anzeigeeinrichtung zur Darstellung des Reinigungszustands der Fläche aktiviert. Zusätzlich oder alternativ kann die Steuereinrichtung die Saugkraft der Saugeinrichtung und/oder die Intensität einer dem Strömungselement vorangestellten Einrichtung zur mechanischen Bodenbearbeitung beeinflussen.

Es ist auch vorteilhaft, wenn die Geschwindigkeit, mit der das Strömungselement über die Fläche bewegt wird, zur Ansteuerung einer weiteren Anzeigeeinrichtung herangezogen wird, mittels der die optimale Geschwindigkeit für eine Bewegung des Strömungselementes angezeigt wird. Hierdurch erhält der Benutzer einen Hinweis auf eventuelle Bedienungsfehler. Die optimale Geschwindigkeit kann beispielsweise in Feldversuchen ermittelt werden, wobei bei einer Bewegung des Strömungselementes mit der optimalen Geschwindigkeit eine maximale Menge der Partikel von der Fläche abgeführt wird. Für verschiedene Bodenbeläge kann diese Geschwindigkeit unterschiedlich sein, dann kann die Art des Bodenbelags durch den vorbeschriebenen Ultraschallsensor ermittelt werden. Bevorzugt kann eine Differenz zwischen der optimalen Geschwindigkeit und der aktuellen Geschwindigkeit angezeigt werden.

Ein Ausführungsbeispiel der Erfindung ist in den Zeichnungen rein schematisch dargestellt und wird nachfolgend näher beschrieben. Es zeigen:
- Figur 1: einen Staubsauger mit Saugdüse, Saugrohr und Saugschlauch in einer vereinfachten Prinzipdarstellung,
- Figur 2: die Draufsicht auf eine Saugdüse in einer perspektivischen Darstellung,
- Figur 3: die perspektivische Ansicht der Saugdüse von unten
- Figur 4: ein Blockschaltbild.

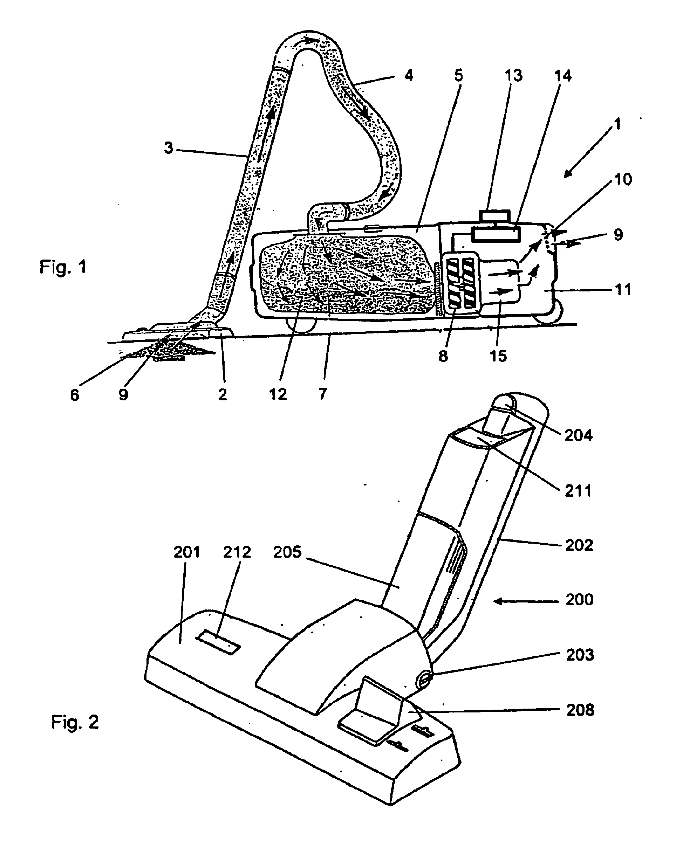

Die Prinzipzeichnung gemäß Figur 1 zeigt einen Staubsauger 1 mit einer Saugdüse 2, einem starren Saugrohr 3 und einem flexiblen Saugschlauch 4, welcher an einen Staubsammelraum 5 angeschlossen ist. Zur Entfernung von Schmutz 6 auf einer zu bearbeitenden Bodenfläche 7 wird durch ein hochtouriges Gebläse 8 Luft 9 durch eine Abluftöffnung 10 aus dem Staubsaugergehäuse 11 geblasen. Dadurch entsteht an der Saugdüse 2 ein Unterdruck, so dass dort Luft 9 und der Schmutz 6 als Zweiphasen-Strömung eingesaugt werden und in bekannter Weise in einem im Staubsammelraum 5 angeordneten Filterbeutel 12 wieder getrennt werden. Alternativ können hier nicht gezeigte Fliehkraft-Abscheider oder andere Filter verwendet werden. Die Einstellung der Saugkraft kann über ein Bedienelement 13 vom Benutzer vorgenommen werden, alternativ ist eine später beschriebene automatische Saugkraftregelung möglich. In beiden Fällen werden von der Gerätesteuerung 14 Schaltsignale erzeugt, die die Drehzahl des Gebläsemotors 15 beeinflussen.

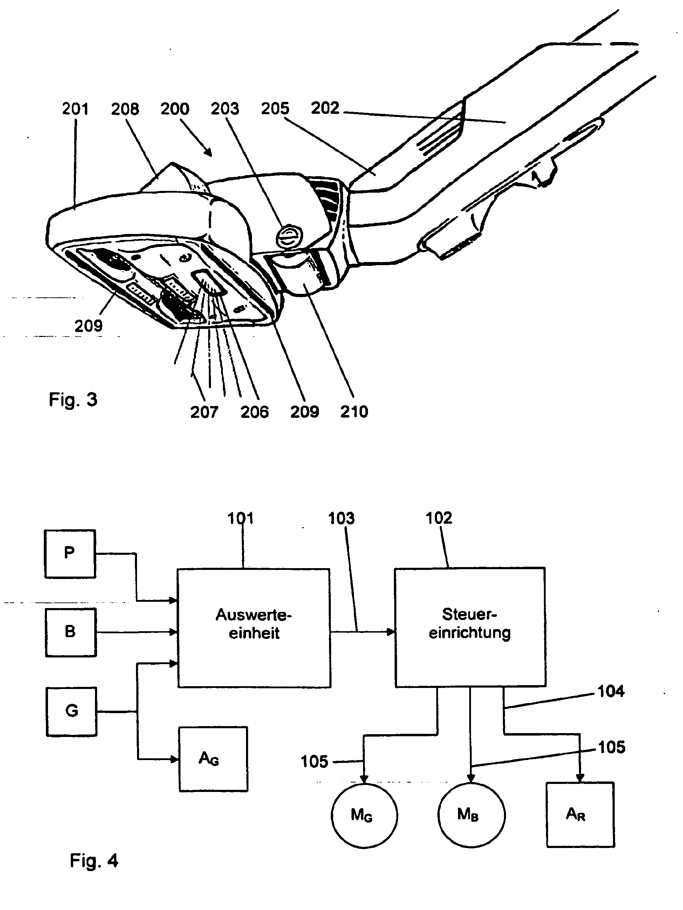

Zur Durchführung des erfindungsgemäßen Verfahrens wird eine spezielle Saugdüse 200 verwendet, wie sie in den Figuren 2 und 3 näher gezeigt ist. Diese Düse 200 ist in dem gezeigten Beispiel eine Bodendüse und besteht im Wesentlichen aus einem Saugmundstück bzw. Düsenteil 201 und einem Anschlussteil 202. Düsenteil 201 und Anschlussteil 202 sind in der Regel über ein im Ansatz gelagertes, sogenanntes Drehkippgelenk 203 miteinander verbunden. Das Anschlussteil 202 weist an seinem oberen Ende eine Verriegelungsklinke 204 auf, mit der die Saugdüse 200 an dem Saugrohr 3 des Staubsaugers 1 befestigt werden kann. Das Anschlussteil 202 fungiert als Strömungselement und ist mit einem Sensor 205 ausgestattet. Dieser dient zur Erzeugung eines Partikelsignals, welches von der Anzahl von Partikeln in der aus Saugluft 9 und Schmutz 6 bestehenden Zweiphasen-Strömung abhängig ist und bei der Reinigung der Bodenfläche 7 vom Gebläse 8 erzeugt wird. Der Sensor 205 ist als piezoelektrischer Sensor ausgebildet, sein Aufbau ist beispielsweise aus der WO 2005/077243 A1 hinreichend bekannt und wird deshalb hier nicht näher beschrieben.

Das erfindungsgemäße Verfahren ist dafür vorgesehen, die noch vorhandene Dichte von Schmutzpartikeln auf der Bodenfläche 7 zu bestimmen. Das Verfahren dient insbesondere dazu, den Reinheitsgrad des gesaugten Bodens zu messen und damit einem Benutzer den Bearbeitungsfortschritt anzuzeigen. Dabei werden die Schmutzteile 6 als Partikel im Rahmen der Zweiphasen-Strömung durch das Anschlussteil 202 angesaugt, während letzteres mit der Saugdüse 200 über den Boden bewegt wird. Innerhalb des Anschlussteils 202 ist der piezoelektrische Sensor 205 angeordnet. Dieser piezoelektrische Sensor 205 wird mit mindestens einem Teil der Zweiphasen-Strömung beaufschlagt. Bei einem Auftreffen eines Schmutzpartikels auf eine Detektorfläche des piezoelektrischen Sensors 205 wird ein Teil einer Bewegungsenergie der Partikel in einen Signalimpuls umgewandelt. Der piezoelektrische Sensor 205 erzeugt eine elektrische Ladung aufgrund der Verformung seiner Oberfläche. Der so generierte Signalimpuls ist abhängig von der Masse und der Geschwindigkeit des einzelnen Partikels. Somit gibt der Impuls genauen Aufschluss über den Typ, die Größe sowie die Geschwindigkeit des auftreffenden Partikels. Mehrere aufgesaugte Schmutzpartikel erzeugen dann ein aus Einzelimpulsen zusammengesetztes Partikelsignal, welches Aufschluss über die Anzahl der auf den Sensor 205 auftreffenden Partikel gibt. Diese Anzahl und damit das Partikelsignal sind abhängig vom Schmutzvorkommen auf der bearbeiteten Bodenfläche 7. Bei der weiteren Verarbeitung dieses Signals spielen aber auch noch andere Einflussfaktoren eine Rolle, die von der Wahrscheinlichkeit des Vorhandenseins von Partikeln in der Zweiphasen-Strömung abhängig sind. Dies sind die Vorschubgeschwindigkeit der Saugdüse 200 und die Staubrückhaltekraft des jeweiligen Bodenbelags 7. Eine geringe Vorschubgeschwindigkeit führt zu einem niedrigeren Staubangebot als das schnelle Bewegen der Saugdüse 200, Teppiche besitzen ein größeres Staubspeichervermögen als Glattböden.

Um diesem Umstand wenigstens ansatzweise Rechnung zu tragen, ist die in den Figuren 2 und 3 dargestellte Saugdüse 200 mit einem Geschwindigkeitssensor und vorzugsweise mit einem Bodenbelagssensor ausgestattet. Als Bodenbelagssensor kann ein beispielsweise aus der EP 1 136 027 A2 bekannter Ultraschallwandler 206 verwendet werden. Dieser strahlt in bekannter Weise ein Ultraschallsignal 207 in Richtung Bodenfläche 7 ab und empfängt je nach Bodenbelag mehr oder weniger starke Reflektionen. Aus der Amplitude dieser Reflektionen kann eine geeignete Schaltung ermitteln, ob ein Glattboden oder ein Teppich gesaugt wird und ein dementsprechendes Bodenbelagssignal erzeugen. Alternativ kann über geeignete Kontakte (nicht dargestellt) die Stellung einer Fußtaste 208 sensiert werden, mit der der Benutzer einen an der Saugdüse 200 angeordneten Borstenkranz 209 auf den jeweiligen Bodenbelag einstellt.

Zur Ermittlung der Geschwindigkeit, mit der die Saugdüse über die zur reinigende Bodenfläche bewegt wird, ist es beispielsweise möglich, die Laufrolle 210 mit einem nicht dargestellten Impulsgeber zu koppeln und aus der Anzahl der Umdrehungen pro Zeiteinheit die Vorschubgeschwindigkeit der Düse 200 zu ermitteln. Auf diese Weise wird durch den Impulsgeber ein Geschwindigkeitssignal erzeugt.

Die drei Signale (Partikelsignal P, Bodenbelagssignal B, Geschwindigkeitssignal G) werden einer Auswerteeinheit 101 zugeführt, welche daraus ein Steuersignal 103 generiert und dieses einer Steuereinrichtung 102 zuführt. Figur 4 zeigt die Signalverarbeitung als Blockschaltbild. Steuereinrichtung 102 und Auswerteeinheit 101 können, wie aus der WO 2005/077243 A1 bekannt, als separate Steuereinheit im Anschlussteil 202 untergebracht sein oder in der Gerätesteuerung 14 des Staubsaugers 1 integriert sein. Die erste Alternative ist dann sinnvoll, wenn die Steuereinrichtung 102 lediglich ein Schaltsignal 104 erzeugt, welches eine Anzeigeeinrichtung A_{R} (siehe auch Anzeige 211 in Figur 2) zur Darstellung des Reinigungszustands der Fläche 7 aktiviert. Wenn Schaltsignale 105 bzw. 106 zur Regulierung der Saugkraft durch Änderung der Drehzahl des Gebläsemotors M_{G} (siehe auch Motor 15 in Figur 1) oder zur Beeinflussung der Drehzahl des Motors M_{B} einer Borstenwalze (nicht gezeigt) erzeugt werden soll, ist es sinnvoll, die Steuereinrichtung 102 in der Gerätesteuerung 14 des Staubsaugers 1 zu integrieren.

Das Partikelsignal P wird in bekannter Weise aufbereitet, beispielsweise kann eine aus der EP 0 759 157 B1 bekannte Ermittlung des Spitzenwerts erfolgen, ebenso besteht die Möglichkeit der Summenbildung oder Integration. Auch der Einsatz anderer statistischer Verfahren zur Signalaufbereitung ist denkbar. Das entsprechend aufbereitete Signal wird dann mit mindestens einem Schwellwert verglichen, aus dem Vergleich wird dann das Steuersignal 103 wie im Folgenden beschrieben generiert. Dabei bezieht sich die Beschreibung zunächst nur auf das Schaltsignal 104 für die Anzeigeeinrichtung A_{R}:

Die quantitative Ausprägung des Partikelsignals P hängt ursächlich von dem Staubabtrag des besaugten Bodenbelags ab, wobei dies von der Auswerte-/Steuereinheit folgendermaßen in eine entsprechende Anzeige umgesetzt wird:
- sehr wenig Staubabtrag, sehr schwaches Partikelsignal P, Anzeige zeigt grün,
- wenig Staubabtrag, geringes Partikelsignal P, Anzeige zeigt gelb bzw. orange,
- hoher Staubabtrag, hohes Partikelsignal P, Anzeige zeigt rot.

Die Auswerteeinheit 101 vergleicht laufend das Partikelsignal P mit wenigstens zwei in der Auswerteeinheit hinterlegten Schwellen S1 und S2. Überschreitet das Partikelsignal die zu den Farben gelb/orange bzw. rot gehörigen Schwellen S1 bzw. S2, wird die Anzeige in der entsprechenden Farbe eingeschaltet. Bei der Festlegung der Schwellen der Auswerteeinheit werden in der Praxis üblicherweise "Normbedingungen" oder "Kalibrierbedingungen" definiert, wie z. B.:
- Partikelsignal P bei Vorschubgeschwindigkeit des Saugvorsatzes, 0,5 m/s,
- Florware als Bodenbelag, z. B. Wilton oder auch Schlingenware.

Die Quantität des Partikelsignals P hängt neben dem Staubabtrag auf dem Bodenbelag in erheblichem Maß auch von den oben genannten Einflussgrößen ab. Wird der Saugvorsatz schneller bewegt, führt dies zu einem höheren Staubabtrag je Zeiteinheit, wodurch die Anzeige tendenziell schneller gelb/orange bzw. rot zeigt, bei einem langsameren Vorschub schaltet die Anzeige zu früh auf grün. Beide Situationen weichen von der Normeinstellung ab, wodurch dem Bediener in Abhängigkeit der oben beschriebenen Normeinstellung eine zu hohe bzw. zu geringe Verschmutzung durch die Anzeige signalisiert wird. Die Vorschubgeschwindigkeit des Saugvorsatzes stellt demzufolge eine Störgröße dar, die bei der Auswertung kompensiert werden muss. Dies geschieht durch die Berücksichtigung der Geschwindigkeit bei der Höhe der Schwellen S1 bzw. S2 mittels eines Geschwindigkeitssignals G. Beträgt die Vorschubgeschwindigkeit mehr als 0,5 m/s, werden die Schwellen S1 und S2 maximal proportional, vorzugsweise jedoch unterproportional angehoben und umgekehrt.

Ferner hängt die Quantität des Partikelsignals P auch vom besaugten Bodenbelag ab. Florware weist im Vergleich zur Schlingenware ein relativ geringes Staubrückhaltevermögen auf, so dass bei Florware eine schnellere Abreinigung erfolgt. In Relation zur Florware kann nur noch Glattboden schneller abgesaugt werden. Die Einflussgröße Bodenbelag beeinträchtigt demzufolge wie die Vorschubgeschwindigkeit ebenfalls den Staubabtrag und damit das Verhalten der Anzeige. Kann der sich auf dem Bodenbelag befindliche Staub wegen der Beschaffenheit des Bodenbelags schnell entfernt werden, führt dies infolge des hohen Staubabtrags bei statischen Schwellen in der Auswerteeinheit tendenziell zu der Anzeige einer zu hohen Verschmutzung und umgekehrt, was nicht den realen Gegebenheiten entspricht. Das Staubrückhaltevermögen des Bodenbelags stellt demzufolge eine Störgröße dar, die bei Kenntnis des vorliegenden Bodenbelags kompensiert werden kann. Dies geschieht mit einem vorzugsweise im oder an dem Saugvorsatz befindlichen Bodenbelagssensor, der das Bodenbelagssignal B liefert. Erkennt der Bodenbelagssensor einen Glattboden, werden im Vergleich zur Florware die Schwellen S1 und S2 der Auswerteeinheit heraufgesetzt und umgekehrt - die Bandbreite hierfür wird vorzugsweise durch Laborversuche ermittelt.

Insbesondere die Schlingenware hat sich wegen ihres Aufbaus hinsichtlich des Staubrückhaltevermögens als kritisch erwiesen. Wegen des hier besonders ausgeprägten Staubrückhaltevermögens der Schlingen kann sich beim Besaugen immer wieder zufällig Schmutz lösen, der zu einer sehr unruhigen Anzeige führt. Als weitere vorteilhafte Option des Verfahrens wird deshalb dem Bediener die Möglichkeit gegeben, bei der Schlingenware die gewünschte Empfindlichkeit und damit die Höhe der Schwellen selbst vorzugeben, je nachdem ob ein schneller Saugfortschritt (hohe Schwellen) oder eine gründliche Reinigung (niedrige Schwellen) gewünscht wird. Dies kann beispielsweise über einen am Anschlussteil 202 angebrachten Schalter (nicht gezeigt) geschehen.

Die oben beschriebene Auswertung des Geschwindigkeitssignals G sowie des Bodenbelagsignals B sowie deren Einfluss auf die Höhe der Schwellen in der Auswerteeinheit kann sowohl einzeln als auch kombiniert durchgeführt werden. Besonders vorteilhaft erweist es sich, wenn in Abhängigkeit des Bodenbelagssignals B (Master) darauf aufbauend mittels des Geschwindigkeitssignals G (Slave) die Schwellen wie beschrieben angepasst werden.

Unabhängig von der Erfassung des Geschwindigkeits- und Bodenbelagssignals G, B können allein aus dem Partikelsignal P vorteilhafte Verfahren abgeleitet werden. Überschreitet das Partikelsignal P eine definierte Höhe, werden die Leistungsaufnahme des Gebläsemotors und damit die Gebläsedrehzahl heraufgesetzt. Dieses Verfahren lässt sich beispielsweise bei einer sogenannten ECO-Stufe des Staubsaugers verwenden. Liegt das Partikelsignal P unter einer bestimmten Schwelle, erfolgt die Reinigung des Bodenbelags bei reduzierter Leistung und die Leistung wird nur dann erhöht, wenn eine hohe Verschmutzung vorliegt. Demzufolge orientiert sich der Energieverbrauch an der vorliegenden Verschmutzung. Ferner wird die Bürstenwalze des Saugvorsatzes nur dann aktiviert, wenn die Schwelle S2 überschritten ist.

Der Stand der Technik offenbart Verfahren, bei dem sich die Anzeige von zufällig losgelösten Staubmengen aus dem Bodenbelag durch die Definition eines Zeitfensters, innerhalb dessen eine bestimmte Anzahl von "Zufallsereignissen" stattfinden muss, orientiert. Eine weitere vorteilhafte Ausprägung des Verfahrens umfasst die Anpassung der Länge des Zeitfensters an das Bodenbelagssignal B und/oder das Geschwindigkeitssignal G. Bei Schlingenware und hoher Vorschubgeschwindigkeit wird das Zeitfenster verlängert und umgekehrt.

Das Geschwindigkeitssignal G kann neben der Verknüpfung mit dem Partikelsignal P zur Ansteuerung einer weiteren Anzeigeeinrichtung A_{G} (siehe auch Anzeige 212 in Figur 2) verwendet werden, in der dem Bediener die Differenz zwischen der optimalen und der aktuellen Vorschubgeschwindigkeit der Saugdüse 200 angezeigt wird. Hierdurch erhält der Benutzer einen Hinweis auf eventuelle Bedienungsfehler. Die optimale Geschwindigkeit kann beispielsweise in Feldversuchen ermittelt werden, wobei bei einer Bewegung des Strömungselementes mit der optimalen Geschwindigkeit eine maximale Menge der Partikel von der Fläche abgeführt wird. Für verschiedene Bodenbeläge kann diese Geschwindigkeit unterschiedlich sein, dann kann die Art des Bodenbelags durch den vorbeschriebenen Ultraschallwandler 206 ermittelt werden.

## Patentansprüche

1. Verfahren zur Auswertung eines Partikelsignals (P) mittels einer Steuereinrichtung (102) zugeordneten Auswerteeinheit (101), bei dem
• das Partikelsignal (P) mittels eines Sensors (205) innerhalb eines Strömungselements (202) erzeugt wird und wenigstens abhängig ist von der Anzahl von Partikeln in einer Zweiphasen-Strömung, welche bei der Reinigung einer Fläche (7) mittels einer mit dem Strömungselement (202) verbundenen Saugeinrichtung erzeugt wird,
• die Auswerteeinheit (101) aus dem Partikelsignal (P) zur weiteren Steuerung eines von der Steuereinrichtung (102) beeinflussten Aktors ein Steuersignal (103) ermittelt,
**dadurch gekennzeichnet,**
**dass** die Auswerteeinheit (101) bei der Ermittlung des Steuersignals (103) neben dem Partikelsignal (P) die Geschwindigkeit (G), mit der das Strömungselement (202) über die Fläche (7) bewegt wird, berücksichtigt.

2. Verfahren nach Anspruch 1,
**dadurch gekennzeichnet,**
**dass** die Geschwindigkeit (G) an einem dem Strömungselement (202) vorangestellten Saugmundstück (201) gemessen wird.

3. Verfahren nach Anspruch 2,
**dadurch gekennzeichnet,**
**dass** die Geschwindigkeit (G) aus den Umdrehungen mindestens eines an dem Saugmundstück (201) angeordneten Rads (210) ermittelt wird.

4. Verfahren nach mindestens einem der vorhergehenden Ansprüche,
**dadurch gekennzeichnet,**
**dass** als Sensor (205) ein piezoelektrischer Sensor verwendet wird, welcher von der Bewegungsenergie der Partikel abhängige Signalimpulse erzeugt.

5. Verfahren nach mindestens einem der vorhergehenden Ansprüche,
**dadurch gekennzeichnet,**
**dass** die Auswerteeinheit (101) bei der Ermittlung des Steuersignals (103) die Art der zu reinigenden Fläche (7) berücksichtigt.

6. Verfahren nach Anspruch 5,
**dadurch gekennzeichnet,**
**dass** die Art der zu reinigenden Fläche (7) mittels eines Ultraschallwandlers (206) ermittelt wird.

7. Verfahren nach mindestens einem der vorhergehenden Ansprüche,
**dadurch gekennzeichnet,**
**dass** die Steuereinrichtung eine Anzeigeeinrichtung (211, A_{R}) zur Darstellung des Reinigungszustands der Fläche (7) aktiviert.

8. Verfahren nach mindestens einem der vorhergehenden Ansprüche,
**dadurch gekennzeichnet,**
**dass** die Steuereinrichtung (102) die Saugkraft der Saugeinrichtung beeinflusst.

9. Verfahren nach mindestens einem der vorhergehenden Ansprüche,
**dadurch gekennzeichnet,**
**dass** die Steuereinrichtung (102) die Intensität einer dem Strömungselement (202) vorangestellten Einrichtung (M_{B}) zur mechanischen Bodenbearbeitung beeinflusst.

10. Verfahren nach mindestens einem der vorhergehenden Ansprüche,
**dadurch gekennzeichnet,**
**dass** die Geschwindigkeit (G), mit der das Strömungselement (202) über die Fläche (7) bewegt wird, zur Ansteuerung einer weiteren Anzeigeeinrichtung (212, A_{G}) herangezogen wird, mittels der die optimale Geschwindigkeit für eine Bewegung des Strömungselementes (202) angezeigt wird.

## Claims

1. Method for evaluating a particle signal (P) by means of an evaluation unit (101) associated with a control device (102), in which:
• the particle signal (P) is generated by means of a sensor (205) within a flow element (202) and is at least dependant on the number of particles in a two-phase flow which is generated during the cleaning of a surface (7) by means of a suction device connected to the flow element (202),
• the evaluation unit (101) determines a control signal (103) from the particle signal (P) in order to further control an actuator influenced by the control device (102), **characterised in that** in addition to the particle signal (P), the evaluation unit (101) takes into account the speed (G) at which the flow element (202) is moved over the surface (7) when determining the control signal (103).

2. Method according to claim 1, **characterised in that** the speed (G) is measured by a suction nozzle (201) attached to the front of the flow element (202).

3. Method according to claim 2, **characterised in that** the speed (G) is determined from the rotation of at least one wheel (210) arranged on the suction nozzle (201).

4. Method according to at least one of the preceding claims, **characterised in that** a piezoelectric sensor is used as a sensor (205) which generates signal impulses dependent on the kinetic energy of the particles.

5. Method according to at least one of the preceding claims, **characterised in that** the evaluation unit (101) takes into account the type of surface (7) to be cleaned when determining the control signal (103).

6. Method according to claim 5, **characterised in that** the type of surface (7) to be cleaned is determined by means of an ultrasonic transformer (206).

7. Method according to at least one of the preceding claims, **characterised in that** the control device activates an indicator device (211, A_{R}) to display the cleaning state of the surface (7).

8. Method according to at least one of the preceding claims, **characterised in that** the control device (102) influences the suction power of the suction device.

9. Method according to at least one of the preceding claims, **characterised in that** the control device (102) influences the intensity of a means (M_{B}) attached to the front of the flow element (202) for mechanical floor treatment.

10. Method according to at least one of the preceding claims, **characterised in that** the speed (G) at which the flow element (202) is moved over the surface (7) is used to control a further indicator device (212, A_{G}), by means of which the optimal speed for a movement of the flow element (202) is displayed.

## Revendications

1. Procédé d'analyse d'un signal particulaire (P) au moyen d'une unité d'analyse (101) affectée à un équipement de commande (102), dans lequel
• le signal particulaire (P) est produit au moyen d'un capteur (205) à l'intérieur d'un élément d'écoulement (202) et est au moins fonction du nombre de particules dans un écoulement à deux phases qui est produit lors du nettoyage d'une surface (7) au moyen d'un équipement d'aspiration raccordé à l'élément d'écoulement (202),
• l'unité d'analyse (101) détermine un signal de commande (103) à partir du signal particulaire (P) pour la commande ultérieure d'un acteur influencé par l'équipement de commande (102),
**caractérisé en ce que**
l'unité d'analyse (101), lors de la détermination du signal de commande (103), prend en compte, outre le signal particulaire (P), la vitesse (G) avec laquelle l'élément d'écoulement (202) est déplacé sur la surface (7).

2. Procédé selon la revendication 1,
**caractérisé en ce que**
la vitesse (G) est mesurée sur une embouchure d'aspiration (201) placée devant l'élément d'écoulement (202).

3. Procédé selon la revendication 2,
**caractérisé en ce que**
la vitesse (G) est déterminée à partir des rotations d'au moins une roue (210) disposée sur l'embouchure d'aspiration (201).

4. Procédé selon au moins une des revendications précédentes,
**caractérisé en ce que**,
en tant que capteur (205), il est utilisé un capteur piézo-électrique qui produit des impulsions de signaux qui dépendent de l'énergie cinétique des particules.

5. Procédé selon au moins une des revendications précédentes,
**caractérisé en ce que**
l'unité d'analyse (101), lors de la détermination du signal de commande (103), prend en compte la nature de la surface (7) à nettoyer.

6. Procédé selon la revendication 5,
**caractérisé en ce que**
la nature de la surface (7) à nettoyer est déterminée au moyen d'un transducteur ultrasonique (206).

7. Procédé selon au moins une des revendications précédentes,
**caractérisé en ce que**
l'unité de commande active un équipement d'affichage (211, A_{R}) pour la représentation de l'état de nettoyage de la surface (7).

8. Procédé selon au moins une des revendications précédentes,
**caractérisé en ce que**
l'équipement de commande (102) influence la force d'aspiration de l'équipement d'aspiration.

9. Procédé selon au moins une des revendications précédentes,
**caractérisé en ce que**
l'équipement de commande (102) influence l'intensité d'un équipement (M_{B}) de traitement mécanique du sol placé devant l'élément d'écoulement (202).

10. Procédé selon au moins une des revendications précédentes,
**caractérisé en ce que**
la vitesse (G) avec laquelle l'élément d'écoulement (202) est déplacé sur la surface (7) est utilisée pour le pilotage d'un autre équipement d'affichage (212, A_{G}) au moyen duquel est affichée la vitesse optimale pour un déplacement de l'élément d'écoulement (202).
